# EUROPÄISCHE PATENTSCHRIFT

(11) **EP 0 818 408 B1**
(45) Veröffentlichungstag und Bekanntmachung des Hinweises auf die Patenterteilung: **05.12.2001**
(21) Anmeldenummer: 97111123.2
(22) Anmeldetag: 03.07.1997
(51) Int. Cl.: B65H 19/10

(54) **Klebeband und Verfahren zu seiner Herstellung**
Adhesive tape and process for its manufacturing
Ruban adhésif et procédé pour sa production

(30) Priorität: 13.07.1996 DE 19628317
(43) Veröffentlichungstag der Anmeldung: 14.01.1998
(73) Patentinhaber: Tesa AG, 20253 Hamburg (DE)
(72) Erfinder: Wienberg, Uwe, 25436 Uetersen (DE)

(56) Entgegenhaltungen:
- EP-A- 0 555 772
- EP-A- 0 683 122
- EP-A- 0 695 709

## Beschreibung

Die Erfindung betrifft ein Klebeband für den fliegenden Rollenwechsel in Papierveredelungsmaschinen oder dergleichen, sowie ein Verfahren zu seiner Verwendung in solchen Maschinen.

Der fliegende Rollenwechsel ist in Papierfabriken oder dergleichen ein gängiges Verfahren, um ohne die schnell laufenden Maschinen anhalten zu müssen eine alte, fast abgespulte Papierrolle durch eine neue zu ersetzen. Dabei werden doppelseitig klebende Selbstklebebänder, sogenannte Fixe, eingesetzt, die einerseits hochklebrig und -tackig sind, andererseits aber aufgrund ihrer wasserlöslichen Selbstklebemassen und Papierträger beim Wiedereinsatz der Papierabfälle in der Papiermaschine nicht stören. Diese Fixe werden in kunstvoller Weise in Zackenform am Bahnanfang verklebt, eine Prozedur, die erfahrene Fachleute verlangt, wobei für den gesamten Arbeitsvorgang aufgrund der schnell laufenden Maschinen nur etwa 4 - 5 Minuten Zeit bleibt.

Obgleich diese Technologie bewährt und eingespielt ist, hat sie doch einige Nachteile. So ist Fachpersonal nötig, Hektik ist vorgegeben, und die Verklebungen sind auch relativ dick, da jeweils zwei Papierlagen und das dazwischen klebende Fix das Resultat sind: ein in der Papierindustrie unerwünschtes Resultat.

Für diese "Spitzenverklebung" beim fliegenden Rollenwechsel gibt es diverse Produkte im Handel, sogenannte Fixe, die neben einem Papierträger eine wasserlösliche Selbstklebemasse beidseits beschichtet aufweisen. Solche Klebebänder sind u.a. unter der Bezeichnung tesafix (Beiersdorf) im Handel.

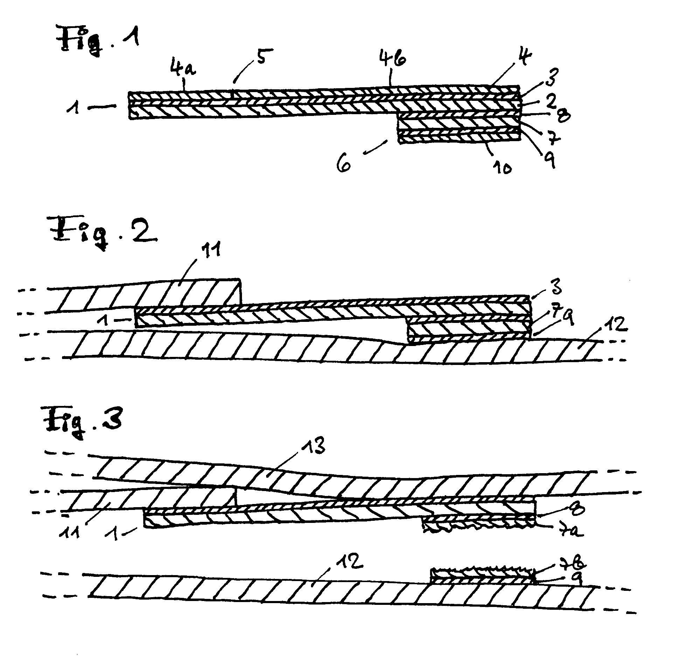

Aus EP-A-055 772 ist ein Klebeband mit einem Papierträger 1 und einer wasserlöslichen Selbstklebemasse für den fliegenden Rollenwechsel bekannt, bei dem klebenden Bereich 2 und 3 gegenüberliegend und nicht überlappend angeordnet sind, so dass eine Anordnung gemäß Figur 2 möglich wird. Diese Anordnung ist einerseits recht dünn, erlaubt aber beim fliegenden Rollenwechsel (Splice) ein Zerreißen in diesem mittleren, nicht verklebten Bereich, in Figur 2 mit A angedeutet, wie dies an sich bekannt ist, so auch durch EP-A-0 695 709, aus der ein ähnliches Klebeband für den fliegenden Rollenwechsel bekannt ist, mit einer Sollbruchstelle in Form einer Längsrillung. Spleißfreudige, beim fliegenden Rollenwechsel spaltende Papierträger sind jedoch nicht vorgesehen.

Aufgabe der Erfindung war es, hier Abhilfe zu schaffen, insbesondere eine dünnere Verklebung beim fliegenden Rollenwechsel zu ermöglichen, zugleich aber auch, diese Rollen wechsel mit mehr Zeit, auch mehr Verarbeitungszeitung zu ermöglichen, ohne aber die bisher erzielten Vorzüge aufzugeben.

Gelöst wird diese Aufgabe, wie dies in den Ansprüchen näher dargelegt ist.

Insbesondere betrifft die Erfindung ein Klebeband für den fliegenden Rollenwechsel in Papierveredelungsmaschinen oder dergleichen, mit einem Papierträger und einer wasserlöslichen Selbstklebemasse, dadurch gekennzeichnet, daß der Papierträger (2) einseitig mit einer wasserlöslichen Selbstklebemasse (3) beschichtet ist, während ein Teil der Rückseite des Papierträgers (2) mit einem doppelseitig klebenden Klebeband (6) ausgerüstet ist, welches seinerseits einen spleißfreudigen Papierträger (7) aufweist, der beidseits mit wasserlöslicher Selbstklebemasse (8 bzw. 9) ausgerüstet ist.

Bevorzugt dabei ist ein Klebeband, wobei die Selbstklebemassen (3 und 9) eine Abdeckung (4 und 10) aufweisen.

Bevorzugt ist ferner ein Klebeband, wobei die auf der Vorderseite vorgesehene Abdeckung (3) mit einem Schlitz (5) versehen ist.

Ferner bevorzugt ist ein Klebeband, wobei das Klebeband (1) 120 bis 150 mm breit ist, während das auf der Rückseite vorgesehene Klebeband (6) 8 - 20 mm, insbesondere 10 - 15 mm breit ist.

Bevorzugt ist auch ein Klebeband, wobei der Schlitz (5) im Abstand von 20 - 40 mm von dem Rand des Klebebandes (1) vorgesehen ist, welcher dem rückseitig vorgesehenen Klebeband (6) entgegengesetzt liegt.

Ferner bevorzugt ist ein Klebeband, wobei das Klebeband (6) auf der Rückseite des Papierträgers (2) so angeordnet ist, daß dieses seitlich mit der einen Seite des Papierträgers (2) abschließt.

Und auch ein Verfahren unter Verwendung derartiger Klebebänder ist Gegenstand der Erfindung, nämlich ein Verfahren eines fliegenden Rollenwechsels in einer Papierveredelungsmaschine oder dergleichen, wobei ein Klebeband mit einem Papierträger und einer wasserlöslichen Selbstklebemasse verwendet wird, dadurch gekennzeichnet, daß man ein Klebeband nach einem der Ansprüche 1 - 6 einsetzt und der obersten Papierbahn einer neuen Papierrolle teilweise hinterklebt, während das auf der Rückseite des Klebebandes befindliche doppelseitige Klebeband seinerseits mit der darunter liegenden Papierbahn verklebt und damit die oberste Papierbahn sichert, worauf die neue Papierrolle neben einer fast gänzlich abgespulten, zu ersetzenden alten Papierrolle plaziert wird und auf gleiche Geschwindigkeit wie diese beschleunigt wird, dann gegen diese gedrückt wird, so daß die offenliegende Selbstklebemasse des Klebebandes mit der Papierbahn der alten Rolle bei im wesentlichen gleichen Geschwindigkeiten der Papierbahnen verklebt, während zugleich der spleißfreudige Papierträger derart spleißt, daß beide Selbstklebemassen, die auf ihm beschichtet waren, von seinen Resten nichtklebend abgedeckt sind.

Bevorzugt ist dabei dieses Verfahren derart, daß von der geschlitzten Abdeckung zunächst nur der kleinere Teil abgezogen wird und das Klebeband hinter die oberste Papierbahn einer neuen Papierrolle mit dem freiliegenden Teil der Selbstklebemasse geklebt wird, währen der größere Teil der Abdeckung erst kurz vor dem Einsatz zum fliegenden Rollenwechsel abgezogen wird.

Erfindungsgemäß wird der Papierindustrie ermöglicht, von dem bisherigen Verfahren der "Spitzenverklebung" abzugehen, ohne aber deren Vorteile aufzugeben.

Denn aus technischen Gründen und auch aus Rationalisierungsgründen ist es erwünscht, beim automatischen Rollenwechsel an Beschichtungsanlagen von der bekannten "Spitzenverklebung" mit beidseitig wiederaufbereitbarem Klebeband (Fix) abzugehen. Nun kann auf ein einseitig klebendes wiederaufbereitbares Klebeband umgestellt werden, mit beachtlichen Vorteilen.

Bei dieser neuen Verklebungstechnik mit einem erfindungsgemäßen Klebeband geht man vorteilhaft so vor, daß die oberste Papierlage (Rohpapier) mit einem etwa 120 mm breiten einseitig klebenden abgedeckten wiederaufbereitbarem Klebeband unterklebt wird (diagonal zur Laufrichtung). Die Unterklebung sollte ca. 30 mm betragen. Vor dem Unterkleben wird das 30 mm perforierte oder geschlitzte Abdeckpapier abgezogen. Für den eigentlichen Splice-Vorgang bleiben nach Abzug des Trennpapieres dann noch etwa 90 mm.

Das einseitig klebende Klebeband mit der offenen Klebebandseite nach außen steht jetzt dem eigentlichen Splice zur Verfügung, wenn die ggf. vorhandene Abdeckung entfernt ist.

Beim Beschleunigen des Papierentwurfes ist erforderlich, daß der Anfang des Papiers (Klebestelle) mit Hilfe eines beidseitig klebenden Klebebandes (wiederaufbereitbar) festgehalten wird. Besonders geeignet ist hierbei ein tesafix, ausgerüstet mit einem spaltfreudigen Papierträger.

Das einseitig klebende Spliceband wird jetzt mit Hilfe dieses beidseitig klebenden spaltfreudigen tesafixes an die nächste Papierlage befestigt.

Um beim Beschleunigen des Papierwurfes (zur Zeit bis ca.1600 m/min) ein Eindringen von Luft zu verhindern, wird vorteilhaft ein Streifen von etwa 12 mm quer über die gesamte Papierbahn zu kleben.

Die erfindungsgemäß erzielten Vorteile liegen insbesondere darin, daß die Klebestelle wesentlich dünner als bisher ist (dadurch weniger Papierabrisse), daß weniger Stillstandzeiten der Maschinen auftreten (Erhöhung des Wirkungsgrades), denn ein Abriß kostet bis zu 30.000,-- DM. Auch die Dicke der Klebestelle ist vorteilhaft gering: zur Zeit: 2 Papierlagen und tesafix Klebeband (Dicke des Klebebandes 0,085 mm), erfindungsgemäß aber nur 1 Papierlage und tesakrepp (Dicke des Klebebandes 0,088 mm). Schließlich kann die Klebestelle außerhalb der Beschichtungsanlage vorbereitet werden (Umroller). Damit ergibt sich eine Personaleinsparung an der Streichanlage sowie mehr Zeit für die Ausführung der Klebestelle am Umroller.

Im folgenden soll die Erfindung anhand eines Ausführungsbeispiels näher beschrieben werden, ohne sie damit aber unnötig einschränken zu wollen. Es zeigen:
- Fig. 1: eine seitliche, schematische Ansicht eines erfindungsgemäßen Klebebandes,
- Fig. 2: eine seitliche, schematische Ansicht eines Klebebandes gemäß Fig. 1, aufgeklebt auf eine Papierrolle und fertig für einen fliegenden Rollenwechsel, und
- Fig. 3: eine Ansicht gemäß Fig. 2, aber nach erfolgtem fliegenden Rollenwechsel.

Im einzelnen zeigt Fig. 1 ein Klebeband 1 mit einem Träger 2 aus gekrepptem Papier, einseitig beschichtet mit einer wasserlöslichen Selbstklebemasse 3. Die Gesamtdicke des Trägers 2 mit Selbstklebemasse 3 beträgt 0,088 mm, die Breite 150 mm, im Handel als tesakrepp 4447 PV 1 Beiersdorf, Deutschland. Abgedeckt ist die Selbstklebemasse 3 mit einem silikonisierten Trennpapier 4, das in 30 mm Abstand vom linken Rand mit einem Schlitz 5 versehen ist, so daß zunächst der linke Teil des Trennpapiers 4 abgenommen werden kann, dann der rechte Teil. Am rechten Ende des Klebebandes 1 ist ein doppelseitig klebendes Klebeband 6 unterklebt, bestehend aus einem spleißfreudigen Papierträger 7, beidseits beschichtet mit wasserlöslicher Selbstklebemasse 8 bzw. 9, und abgedeckt mit einem silikonisierten Trennpapier 10. Das Klebeband 6 hat eine Breite von 12 mm und ist unter der Bezeichnung tesafix 4901 PV 10 im Handel (Beiersdorf, Österreich).

In Fig. 2 ist dargestellt, wie ein solches Klebeband 1 hinter eine Papierbahn 11 geklebt ist, und zwar mit dem linken Teil, nachdem von diesem der Teil des Trennpapiers 4a abgezogen wurde. Auch das Trennpapier 10 wurde von der Unterseite des unterklebten Klebebandes 6 abgezogen und die damit freiliegende Selbstklebemasse 9 auf die unter der Papierbahn 11 liegende Papierbahn 12 einer Papierrolle verklebt. Auch der rechte Teil 4 b des Trennpapiers 4 wurde abgezogen, so daß die so ausgerüstete Papierrolle fertig für einen fliegenden Rollenwechsel ist, wobei die Verklebung des Klebebandes 1 schräg über die Rolle verläuft, um einen Ruck im Moment des fliegenden Rollenwechsels zu vermeiden.

Die Selbstklebemasse 3 liegt nun offen und bereit für diesen fliegenden Wechsel, in einer Breite von 120 mm und über die gesamte Breite der Papierrolle.

Die so ausgerüstete (neue) Papierrolle wird neben die abgewickelte (alte) Papierrolle gebracht, an die die neue angesetzt werden soll, und auf die gleiche Drehgeschwindigkeit beschleunigt wie diese. Ist dies erreicht, kann der Wechsel vollzogen werden: die neue Rolle wird an die alte herangeführt, die Selbstklebemasse 3 verklebt gemäß Fig. 3 mit der Papierbahn 13 der alten Rolle, während der spleißfreudige Papierträger 7 derart spleißt, daß ein Teil 7a auf dem Klebeband 1 verbleibt und dort die Selbstklebemasse 8 abdeckt, während der andere Teil 7b auf der Selbstklebemasse 9 verbleibt, welche auf der Papierbahn 12 klebt. Damit sind beide Selbstklebemassen 8 und 9 gewissermaßen neutralisiert, kleben nicht mehr, und stören damit auch nicht im weiteren Prozeß in den Papiermaschinen.

## Patentansprüche

1. Klebeband für den fliegenden Rollenwechsel in Papierveredelungsmaschinen oder dergleichen, mit einem Papierträger und einer wasserlöslichen Selbstklebemasse, **dadurch gekennzeichnet, daß** der Papierträger (2) einseitig mit einer wasserlöslichen Selbstklebemasse (3) beschichtet ist, während ein Teil der Rückseite des Papierträgers (2) mit einem doppelseitig klebenden Klebeband (6) ausgerüstet ist, welches seinerseits einen spleißfreudigen Papierträger (7) aufweist, der beidseits mit wasserlöslicher Selbstklebemasse (8 bzw. 9) ausgerüstet ist.

2. Klebeband nach Anspruch 1, **dadurch gekennzeichnet, daß** die Selbstklebemassen (3 und 9) eine Abdeckung (4 und 10) aufweisen.

3. Klebeband nach Anspruch 2, **dadurch gekennzeichnet, daß** die auf der Vorderseite vorgesehene Abdeckung (3) mit einem Schlitz (5) versehen ist.

4. Klebeband nach Anspruch 1, **dadurch gekennzeichnet, daß** das Klebeband (1) 120 bis 150 mm breit ist, während das auf der Rückseite vorgesehene Klebeband (6) 8 - 20 mm, insbesondere 10 - 15 mm breit ist.

5. Klebeband nach Anspruch 3, **dadurch gekennzeichnet, daß** der Schlitz (5) im Abstand von 20 - 40 mm von dem Rand des Klebebandes (1) vorgesehen ist, welcher dem rückseitig vorgesehenen Klebeband (6) entgegengesetzt liegt.

6. Klebeband nach Anspruch 1, **dadurch gekennzeichnet, daß** das Klebeband (6) auf der Rückseite des Papierträgers (2) so angeordnet ist, daß dieses seitlich mit der einen Seite des Papierträgers (2) abschließt.

7. Verfahren eines fliegenden Rollenwechsels in Papierveredelungsmaschine oder dergleichen, wobei ein Klebeband mit einem Papierträger (2) und einer wasserlöslichen Selbstklebemasse (3) verwendet wird, **dadurch gekennzeichnet, daß** man ein Klebeband nach einem der Ansprüche 1 - 6 einsetzt und der obersten Papierbahn einer neuen Papierrolle teilweise hinterklebt, während das auf der Rückseite des Klebebandes befindliche doppelseitige Klebeband seinerseits mit der darunter liegenden Papierbahn verklebt und damit die oberste Papierbahn sichert, worauf die neue Papierrolle neben einer fast gänzlich abgespulten, zu ersetzenden alten Papierrolle plaziert wird und auf gleiche Geschwindigkeit wie diese beschleunigt wird, dann gegen diese gedrückt wird, so daß die offenliegende Selbstklebemasse des Klebebandes mit der Papierbahn der alten Rolle bei im wesentlichen gleichen Geschwindigkeiten der Papierbahn verklebt, während zugleich der spleißfreudige Papierträger derart spleißt, daß beide Selbstklebemassen, die auf ihm beschichtet waren, von seinen Resten nichtklebend abgedeckt sind.

8. Verfahren nach Anspruch 7, **dadurch gekennzeichnet, daß** von der geschlitzten Abdeckung zunächst nur der kleinere Teil abgezogen wird und das Klebeband hinter die oberste Papierbahn einer neuen Papierrolle mit dem freiliegenden Teil der Selbstklebemasse geklebt wird, währen der größere Teil der Abdeckung erst kurz vor dem Einsatz zum fliegenden Rollenwechsel abgezogen wird.

## Claims

1. Adhesive tape for flying reel change in paper finishing machines or the like, having a paper backing and a water-soluble self-adhesive composition, **characterized in that** the paper backing (2) is coated on one side with a water-soluble self-adhesive composition (3) while part of the reverse side of the paper backing (2) is provided with a double-sided adhesive tape (6), which in turn has a readily splicing paper backing (7) which is provided on both sides with water-soluble self-adhesive composition (8 and 9 respectively).

2. Adhesive tape according to Claim 1, **characterized in that** the self-adhesive compositions (3 and 9) have a cover (4 and 10).

3. Adhesive tape according to Claim 2, **characterized in that** the cover (3) provided on the front side has a slit (5).

4. Adhesive tape according to Claim 1, **characterized in that** the adhesive tape (1) is from 120 to 150 mm in width while the adhesive tape (6) provided on the reverse side is 8 - 20 mm, in particular 10 - 15 mm, wide.

5. Adhesive tape according to Claim 3, **characterized in that** the slit (5) is provided at a distance of 20 - 40 mm from the edge of the adhesive tape (1) which lies opposite the adhesive tape (6) provided on the reverse side.

6. Adhesive tape according to Claim 1, **characterized in that** the adhesive tape (6) on the reverse side of the paper backing (2) is disposed such that it ends laterally with one side of the paper backing (2).

7. Method of flying reel change in a paper finishing machine or the like, where an adhesive tape having a paper backing (2) and a water-soluble self-adhesive composition (3) is used, **characterized in that** an adhesive tape according to one of Claims 1 - 6 is employed and bonds the back of part of the topmost web of a new reel of paper, while the double-sided adhesive tape located on the reverse side of the adhesive tape in turn bonds the underneath web of paper and thus secures the topmost web of paper, whereupon the new reel of paper is placed adjacent to an almost fully unwound reel of paper that is to be replaced and is accelerated to the same speed as the old reel, and then is pressed against it so that the exposed self-adhesive composition of the adhesive tape bonds with the paper web of the old reel when the webs of paper are at essentially the same speeds, while at the same time the readily splicing paper backing splices in such a way that the two self-adhesive compositions with which it was coated are covered non-adhesively by the remains of said spliced paper backing.

8. Method according to Claim 7, **characterized in that** first of all only the smaller part of the slitted cover is peeled off and the adhesive tape is bonded to the exposed part of the self-adhesive composition behind the topmost web of a new reel of paper, while the larger part of the cover is not peeled off until shortly before its use for flying reel change.

## Revendications

1. Ruban adhésif pour le changement volant de rouleau dans des machines d'ennoblissement de papier ou analogues, comprenant un support de papier et une masse autocollante soluble dans l'eau, **caractérisé en ce que** le support de papier (2) est revêtu sur une face d'une masse autocollante soluble dans l'eau (3), tandis qu'une partie de la face arrière du support de papier (2) est revêtue d'un ruban adhésif collant double face (6), qui présente, pour sa part, un support de papier (7) susceptible de se fendre qui est revêtu sur les deux faces d'une masse autocollante soluble dans l'eau (respectivement 8 et 9).

2. Ruban adhésif selon la revendication 1, **caractérisé en ce que** les masses autocollantes (3 et 9) présentent un recouvrement (4 et 10).

3. Ruban adhésif selon la revendication 2, **caractérisé en ce que** le recouvrement (3) prévu sur la face avant est pourvu d'une fente (5).

4. Ruban adhésif selon la revendication 1, **caractérisé en ce que** le ruban adhésif (1) a une largeur de 120 à 150 mm, tandis que le ruban adhésif (6) prévu sur la face arrière a une largeur de 8-20 mm, en particulier de 10-15 mm.

5. Ruban adhésif selon la revendication 3, **caractérisé en ce que** la fente (5) est prévue à distance de 20-40 mm du bord du ruban adhésif (1), qui se situe à l'opposé du ruban adhésif (6) prévu au verso.

6. Ruban adhésif selon la revendication 1, **caractérisé en ce que** le ruban adhésif (6) est agencé sur la face arrière du support de papier (2) de telle sorte que celui-ci se termine latéralement avec l'un des côtés du support de papier (2).

7. Procédé de changement volant de rouleau dans une machine d'ennoblissement de papier ou analogue, dans lequel on utilise un ruban adhésif muni d'un support de papier et d'une masse autocollante soluble dans l'eau, **caractérisé en ce qu'**on emploie un ruban adhésif selon l'une quelconque des revendications 1-6 et on le colle partiellement à l'arrière de la bande de papier supérieure d'un nouveau rouleau de papier, tandis que le ruban adhésif double face se trouvant au verso du ruban adhésif se colle, pour sa part, sur la bande de papier se trouvant en dessous et fixe donc la bande de papier supérieure, après quoi le nouveau rouleau de papier est placé à côté d'un rouleau de papier consommé à remplacer et qui est presque complètement déroulé et est accéléré à la même vitesse que celui-ci, est ensuite pressé contre celui-ci de telle sorte que la masse autocollante découverte de la bande de papier se colle à la bande de papier du rouleau consommé à des vitesses sensiblement égales des bandes de papier, tandis que, simultanément, le support de papier susceptible de se fendre est raccordé de manière que les deux masses autocollantes, qui étaient appliquées sur ce support, soient recouvertes par ses restes de façon non collante.

8. Procédé selon la revendication 7, **caractérisé en ce qu'**il n'est tout d'abord retiré du recouvrement fendu que la partie la plus petite et le ruban adhésif est collé à l'arrière de la bande de papier supérieure d'un nouveau rouleau de papier avec la partie libre de la masse autocollante, tandis que la partie plus grande du recouvrement n'est retirée que peu de temps avant son utilisation pour le changement volant de rouleau.
